# EUROPEAN PATENT SPECIFICATION

(11) **EP 2 144 015 B1**
(45) Date of publication and mention of the grant of the patent: **24.05.2017**
(21) Application number: 09251785.3
(22) Date of filing: 13.07.2009
(51) Int. Cl.: F24D 19/00, F24D 19/10, G05D 23/19, G05D 23/275

(54) **Thermostatic radiator valves and control thereof**
Thermostatische Heizkörperventile und Steuerung dafür
Robinets de radiateur thermostatiques et leur commande

(30) Priority: 11.07.2008 GB 0812730
(43) Date of publication of application: 13.01.2010
(73) Proprietor: Pegler Limited, Doncaster, South Yorkshire DN4 8DF (GB)
(72) Inventor: Manning, Thomas, Beverley East Riding of Yorkshire, HU17 7JG (GB); Nortcliffe, Richard T., Mexborough South Yorkshire S64 8EH (GB); Wilson, Martin Ivor, Doncaster DN3 2NX (GB); Mitchell, Simon James, Wakefield West Yorkshire WF4 5PF (GB)
(74) Representative: Wilson Gunn

(56) References cited:
- US-A- 3 069 087
- US-A- 4 410 132
- US-A1- 2005 051 637

## Description

The present invention relates to radiator valves, in particular thermostatic radiator valves (TRV), and to a method of controlling the operation of radiator valves.

Central heating systems typically comprise a boiler for heating water, and a plurality of water/air heat exchangers (normally, but misleadingly, called radiators: this convention will be used herein) and a system of pipes through which hot water is pumped from the boiler to the radiators and back again.

It is conventional for each radiator to have a water inlet and a water outlet passage, each passage being provided with a flow-control valve. One such valve is set by an installer to limit the maximum flow through the radiator, while the other is provided with a user control by means of which the flow of water through the radiator can be modified in order that its heat output can be controlled. In many systems the user control is a thermostatic valve which controls the flow of water through the radiator in response to changes in ambient temperature, the flow being increased as the temperature falls. Such thermostatic valves typically have two principal interconnected components; a flow valve and a control head, the flow valve being opened and or shut in response to temperature variations detected by the control head. In some simple systems the control head contains an element that undergoes mechanical expansion in response to temperature variation. In other embodiments, the control head contains an electronic temperature sensor and means for driving the flow valve in response to variations in temperature detected by the electronic sensor.

Typically in such systems when a desired room temperature is reached, the TRV is partly open, the flow of hot water through the valve being sufficient to balance heat losses from the room thus maintaining a steady temperature. In many systems, the boiler is programmed to monitor the temperature of returning water to determine whether it should remain active since water circulating through one or more radiators will cool more than water that is prevented from entering such radiators. If most or all valves remain partly open, the boiler produces more hot water than is necessary. In some cases the boiler may then act to continuously produce a relatively small steady flow of heated water operating above the condensing temperature range of the boiler. This is not a particularly efficient mode of boiler operation. In most cases, when most radiators are satisfied, this results in rapid cycling of the boiler which is also an inefficient mode of operation.

This problem is addressed in GB2387669 which discloses a multizone heating system having dedicated radiators and dedicated temperature sensors in each zone. In this document by reference to a measured zone temperature a required duty cycle of opening for controlled radiator valves in the plurality of zones is calculated. The on periods in each duty cycle are then synchronised with the on period of the boiler by means of a synchronisation signal. Whilst this does provide for some level of improvement in efficiency, the solution is relatively complex, inflexible and requires considerable central processing in order to accurately calculate duty cycles.

In US2005/051637 there is disclosed a system for controlling a temperature of a room, the system comprising a heating/and or cooling system with a control system for at least partly controlling the temperature of the room, the system comprising: a temperature-setting device for setting a set-point value for the temperature of the room, a room temperature sensor for determining a current room temperature, a supply medium temperature sensor for sensing a temperature of a heating and/or cooling medium of the system, the control system being adapted to determine if the set-point value for the room temperature and the current room temperature differ with more than a given difference and to control the heating and/or cooling system so as to change the current room temperature, the control system being further adapted to change the set-point value for the temperature of the room based on the temperature of the heating and/or cooling medium.

It is therefore an object of the present invention to provide a radiator valve and/or a method of operating a radiator valve that at least partially overcomes or alleviates the above problems.

According to a first aspect of the invention, there is provided a controllable radiator valve comprising: a valve driving means operable to controllably drive a valve member between an open position and a closed position; and a temperature sensor located in and operable to determine a temperature of a zone to be heated by a radiator which is controlled by the valve wherein the valve driving means is in communication with the temperature sensor and is operable in response thereto to drive the valve member to a fully closed position if the sensed temperature exceeds a first threshold temperature, the first threshold temperature being lower than a specified target temperature for the zone, characterised in that there is a second threshold temperature higher than the first threshold temperature and, the valve is re-opened from the fully closed position if the temperature of the zone exceeds then drops below the second threshold temperature.

According to a second aspect of the present invention there is provided a method of operating a radiator valve of the type comprising a valve driving means operable to controllably drive the valve between an open position and a closed position comprising the steps of: sensing a temperature of a zone to be heated; and fully closing the valve in the event that the sensed temperature exceeds a first threshold temperature, the first threshold temperature being lower than a specified target temperature for the zone, characterised in that there is a second threshold temperature higher than the first threshold temperature and, the valve is re-opened from the fully closed position if the temperature of the zone exceeds then drops below the second threshold temperature.

In this manner, the present invention exploits the thermal inertia of the hot water already in the radiator to enable the heated zone temperature to be raised from the first threshold temperature to the specified target temperature. This reduces the temperature variance or hysteresis about the target temperature and thus avoids demanding an additional supply of hot water from the boiler and therefore reduces the energy consumption of the system by avoiding overshooting the target temperature.

The method of the second aspect of the present invention may incorporate any or all features described in relation to the first aspect of the present invention as desired or as appropriate.

At zone temperatures below the first and second predetermined temperatures, the valve may be operable in the manner of a conventional thermostatic valve. Preferably, the valve opening at the second threshold temperature restores the valve to a partly open position that the equivalent that which a thermostatic valve would be in at the second predetermined temperature.

The target temperature may be preset. Alternatively, the target temperature may be user defined. The first and second predetermined temperatures may be defined by reference to the target temperature.

The temperature may be sensed by an electronic temperature sensor operable to output signals indicative of the temperature in the zone to be heated by the radiator. Such a sensor may be incorporated into the valve housing or may be mounted separately. If the sensor is mounted separately, it is preferably mounted within the zone to be heated. If the sensor is mounted separately, it may be in communication with the valve control means via any suitable wired or wireless link.

Alternatively, the temperature may be sensed by a sensing element operable to expand or contract with temperature variation. In such embodiments, the valve may be primarily driven by the element or may be primarily in communication with the element by direct physical contact.

In such embodiments further means may be provided to determine the extent of any expansion or contraction such that signals indicative of the zone temperature can be generated. Such signals can be used to estimate the point at which the zone temperature exceeds the first threshold temperature. In particular, such signals may be generated in response to monitoring the position of an end point of the element. The target temperature may be set by rotating the valve housing to limit the range of movement of the sensing element. The first and second predetermined temperatures may be defined by a particular level of expansion or contraction of the element.

Valve operation and/or sensing operation may be powered by any suitable power source. In particular the valve may be connected to an external power source or may incorporate an internal power source. In one preferred embodiment, the internal power source is a battery which may be a rechargeable battery. The valve may additionally or alternatively incorporate energy scavenging means for the purpose of powering valve operation. Such energy scavenging means may include thermoelectric, photoelectric, piezoelectric or RF scavenging means as desired or as appropriate.

According to a third aspect of the present invention there is provided a radiator incorporating a valve according to the first aspect of the present invention or a valve operable according to the method of the second aspect of the present invention.

According to a fourth aspect of the present invention there is provided a heating system comprising: a boiler; and one or more radiators according to the third aspect of the present invention, the radiators provided in one or more zones to be heated.

The system may be provided with a system controller operable to control operations. The system may also be provided with one or more additional devices or sensors. Such additional sensors may be occupancy sensors. Suitable examples of occupancy sensors include active or passive infrared sensors.

According to a fifth aspect of the present invention there is provided a method of controlling a heating system of the type comprising a boiler and one or more radiators, the method comprising the steps of: determining whether the heating demand is satisfied in each individual zone; starting heating operation of the boiler if it is determined that demand is not satisfied in greater than a first specified number of zones; and stopping heating operation of the boiler if it is determined that heating demand is satisfied in a greater a second specified number of zones.

This method of control exploits the thermal inertia of the whole heating system to enable a desired level of heating to be provided more efficiently.

The heating system may be a heating system in accordance with the fourth aspect of the present invention. Alternatively, the heating system may be a heating system wherein one or more radiators are provided with a valve operable to move controllably between an open position and a closed position in response to a temperature sensing element, means for monitoring the temperature sensing element or valve position and means for communicating said information to devices external of the valves. In such valves, the valve may be either driven directly by expansion/contraction of the sensing element or driven in response to an electrical signal generated by the sensing element.

The determination of whether heating demand is satisfied in each zone may involve monitoring the output of the temperature sensor and/or monitoring the status of the valve members of the radiators. Such determination may be carried out by a system controller. The system controller may be operable to control the operation of the boiler. The system controller may be in wired or wireless communication with the boiler, valves and/or temperature sensors as required or as desired.

The temperature sensors in each zone may have equal target temperatures or may have different target temperatures. The first or second threshold temperatures may be equal and/or differ for each zone. This can allow the system to take into account varying degrees of heat loss or gain from different zones.

The target temperatures and/or first and second threshold temperatures for each zone may be set locally using the temperature sensors or may be set centrally using the system control means. In some embodiments, the system controller may be in communication with both the temperature sensors and the valve driving means and may be operable to compare the zone temperature with the target and/or first and second threshold temperatures and thereby command the valve driving means to open or close as required. In particular, this may enable the system controller to automatically balance the system such that each zone heats up at a substantially similar rate. Using such functionality can overcome the need for an installer to manually balance the system prior to operation.

The method may further vary operation in response to or update scheduled operations in response to sensed zone temperatures and or in response to parameters sensed by additional sensors or devices. In one example the additional sensors may comprise additional temperature sensors. In a further example the system may additionally or alternatively incorporate occupancy sensors such as passive or active infra red sensors.

In implementations using temperature sensing to vary or update operations, the method may involve sensing the temperature of a zone in advance of a system activation time. The sensed temperature may be compared to the target temperature and/or to a sensed external temperature. The system may then be further operable to advance the activation time if the sensed zone temperature is lower than the target temperature or if the difference between sensed zone temperature and the external temperature exceeds a preset value. The period by which the activation time is advanced being dependent upon the difference between the sensed zone temperature and the target temperature and/or the amount by which the difference between the sensed zone temperature the external temperature exceeds the preset value. Said method may additionally or alternatively be applied to maintaining a hot water tank at a desired target temperature.

In one implementation incorporating occupancy sensors, the target temperature of a zone may vary in response to whether it is determined to be occupied at a particular time. In particular, if the system is activated and a zone is determined to be unoccupied, the method may reset the target temperature to a lower value. In further implementations, the method may include the further step of learning and storing patterns of zone occupancy and operating the heating system in response to said learnt occupancy patterns.

The method may also be operable to vary the target temperature in one or more zones in response to an override instruction. Such an instruction may be generated in response to user actuation of a suitable control provided on a particular valve or upon the system controller. In the event that a particular override is made on a predetermined number of consecutive occasions, the override value or state may be reset as the default value or state.

In order that the invention is more clearly understood specified embodiments will now be described, by way of example only and with reference to the following drawings, in which: -
- Figure 1: is a schematic block diagram of a radiator and a first embodiment of a valve according to the present invention;
- Figure 2: is a schematic block diagram of a radiator and a second embodiment of a valve according to the present invention;
- Figure 3: is a schematic diagram of a heating system according to the present invention; and
- Figure 4: is a schematic block diagram of a heating system controller for the heating system of figure 3.

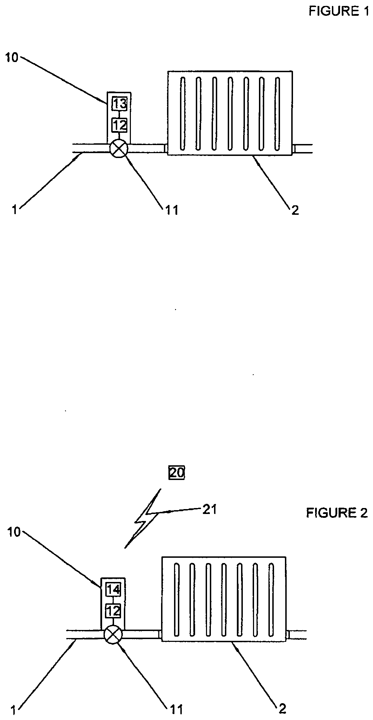

Turning to figure 1, there is provided a radiator valve 10 according to the present invention. The radiator valve 10 is fitted to a radiator 2 operable to heat a zone within which it is situated. The radiator valve 10 comprises a valve member 11, a valve driving means 12 and a temperature sensor 13. The valve member 11 is movable between a fully closed position wherein it blocks the flow of heated water through a pipe 1 to the radiator 2 to a fully open position wherein water is free to flow from pipe 1 to the radiator 2. At positions intermediate between the fully open and the fully closed position, the valve member 1 restricts the flow from the pipe 1 to the radiator 2.

The valve driving means 12 is operable to move the valve member 11 between the fully open and fully closed positions. It moves the valve member 11 in response to the zone temperature so as to open the valve member 11 further as the temperature drops. The valve driving means 12 may comprise an electric motor. Alternatively, the valve driving means 12 may comprise a temperature sensitive expansion element biased against a suitable spring. In such cases the temperature sensitive expansion element may effectively also act as the temperature sensing element 13

The zone temperature is sensed by the temperature sensor 13. The temperature sensor 13 can be a separate electronic temperature sensor or may comprise a temperature sensitive expansion element biased against a suitable spring. In such an embodiment a separate temperature sensor the zone temperature may be sensed by detecting the expansion or contraction of the temperature sensitive expansion element.

In another embodiment of the valve shown in figure 2, the valve 10 is in communication with a wall mounted temperature sensor 20. In the embodiment of figure 2, the wall mounted temperature sensor 20 and the valve 10 communicate via an RF link 21, the valve 10 being provided with a suitable RF receiver (or transceiver) 14. The valve 10 still comprises suitable driving means 12 such as a motor or if desired a temperature sensitive expansion element. The mounting of the sensor 20 on the wall can provide a more accurate assessment of the room temperature as experienced by an occupant.

In operation, in either above embodiment, the valve driving means 12 is operable in response to a change of zone temperature to move the valve member 11 thus affecting the flow of heated water to the radiator 2. In the present invention however, the motor of the valve driving means 12 is operated when the zone temperature rises above a first threshold temperature to fully close the valve member 11. The first threshold temperature is lower than a preset target temperature for the zone to be heated.

By causing the valve 10 to close fully before the zone temperature reaches the target temperature, the radiator 2 is prevented from drawing more hot water from the boiler. This reduces the demand on the boiler. Additionally, since the radiator 2 will at this time already contain hot water the zone temperature will continue to rise for a period of time after valve 10 is fully closed, thus allowing the target temperature to be achieved. Operating in this manner offers an efficiency saving since a lesser supply of hot water is required from the boiler.

If the zone temperature subsequently drops below a second predetermined threshold temperature, normal operation of the valve 10 is resumed. This might typically involve using the driving means 12 to open the valve member 11. The valve member 11 is typically opened to a partly open position equivalent to the partly open position it would be in during standard thermostatic operation.

The second predetermined threshold temperature is also lower than the target temperature and may be equal to, lower than or higher than the first predetermined target temperature as desired or as appropriate. Typically, the first and second predetermined temperatures are defined by reference to the target temperature.

The valve 10 typically incorporates a rechargeable battery and energy scavenging means for charging said battery. Typically, the energy scavenging means might include thermoelectric means or RF scavenging means.

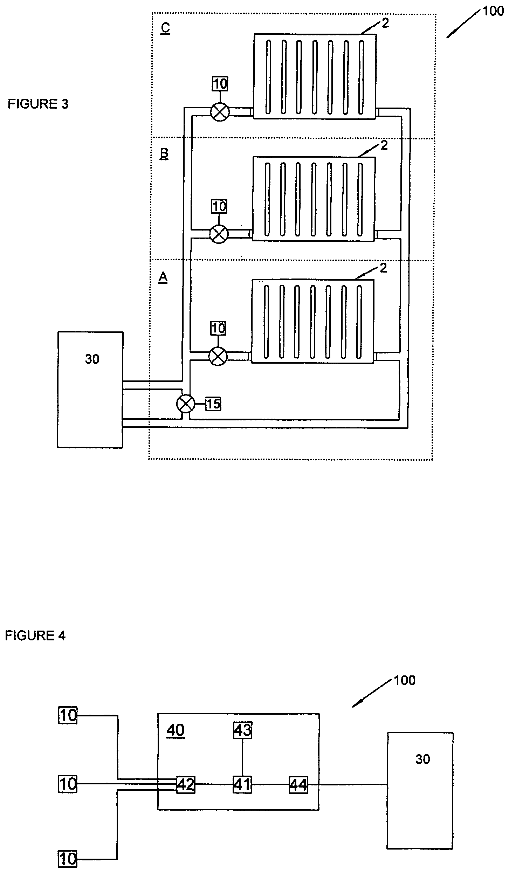

Turning now to figure 3, a schematic illustration is shown of a heating system 100 incorporating such valves 10. Such a system is shown as being implemented using valves according to figure 1 however it is clear that such a system could be alternatively implemented using valves in accordance with those shown in figure 2 or a mixture of both types of valve. In the system 100, a boiler 30 supplies hot water to three radiators 2, each controlled by a valve 10. The system 100 further comprises an automatic bypass valve 15. The radiators are provided in three separate heating zones a, b & c. The zones a, b & c may each have identical or different target temperatures. In operation, the boiler supplies hot water to each of the radiators 2. The flow of hot water received by each radiator 2 is controlled by the associated valve 10 in response to zone temperature in the respective zone a, b, c. As above, the valve opens as the zone temperature drops and closes as the zone temperature rises and in particular, the valve 10 is driven fully closed when the zone temperature exceeds a first predetermined threshold and reverts from closed to normal operation when the zone temperature drops below a second predetermined threshold.

To improve the efficiency of such a system further, the boiler 30 can be controlled in response to valve 10 position. In particular, when the valves 10 are closed, the automatic bypass valve 15 will open and thus no hot water will flow into the radiators 2, and thus at such times there is no need for the boiler 30 to continue to heat water. As such, the system 100 is designed to shut down boiler 30 when a first specified number of valves 10 are closed and to re-start boiler 30 operation once a second specified number of valves have reverted to normal operation. In order to facilitate this, the valves 10 are each provided with suitable link to a system controller 40. The link may take the form of any suitable wired or wireless link. Typically, the link may be an RF link operating in accordance with a suitable protocol such as ZigBee or similar. The valves 10 may be provided with suitable transceivers to enable such functionality. The valves may be operable to send information as to their current status and, if desired, information as to zone temperature to the controller 40.

Turing to figure 4, the system controller 40 is illustrated schematically. The controller comprises a processor 41, a transceiver unit 42, a timer 43 and a relay 44. The transceiver 42 enables the connection of the controller 40 with the valves 10 via the wireless link. The timing unit 43 enables the controller to operate the system 100 in timed operation as is conventional for heating systems. The timing unit may be provided with suitable user input means and a display enabling a user to adjust the system activation timings. The relay 44 enables the activation or deactivation of the boiler 30 as required.

In operation, the processor may check the timing unit 43 before activating the boiler 30 using relay 44. In some circumstances however, the processor 41 may be operable to override the timing unit and activate the boiler 30, for instance if the temperature in one of the zones a, b, c as monitored by the valve 10 drops below a critical threshold, say 3°C.

Assuming the timing unit or the override indicates that the system 100 should be activated, the processor 41 activates the boiler 30 via relay 44. During operation, the processor 41 receives information from the various valves 10 as to their current status. When the processor 41 determines that a first specified number (in the example shown say two out of the three valves 10, but in larger systems a different or larger number of valves may be specified) of valves 10 are fully shut, the processor 41 uses relay 44 to deactivate boiler 30 and thus halt the continued heating of water. The zone with an open valve will still receive a flow of previously heated water and thus may still be heated. When it is determined that a second specified number (in the example shown say two out of the three valves 10, but in larger systems a different or larger number of valves may be specified) of valves 10 have reverted to normal operation, the processor 41 (assuming that the timing unit 43 indicates that the system 100 should be operational) uses relay 44 to activate boiler 30 and thus restart the heating of water. In this manner, the boiler 30 is only activated for the heating of water when it is required by a specified number of radiators 2, and thus the system 100 operates more efficiently. Indeed such a system 100 may save an additional few percent in fuel usage compared to a standard heating system.

It is also possible to apply this functionality to a system incorporating thermostatic valves, if said standard thermostatic valves are additionally provided with means for monitoring valve position and means for communicating such information to a system controller. In such cases, determination of whether heating demand is satisfied is made by reference to a predetermined valve position. The position is selected to be indicative of the either the target temperature being achieved or a temperature slightly less than the target temperature being achieved. As above, when the system controller determines that a first specified number of valves have reached the predetermined position or a position more closed than the predetermined position, the controller deactivates the boiler and thus halts the continued heating of water. Any zone with an open valve will still receive a flow of previously heated water and thus may still be heated. When it is determined that a second specified number of valves have reverted to a position more open than the predetermined position, the system controller activates the boiler and thus restarts the heating of water.

## Claims

1. A controllable radiator valve (10) comprising: a valve driving means (12) operable to controllably drive a valve member (11) between an open position and a closed position; and a temperature sensor (13, 20) located in, and operable to determine a temperature of, a zone (A, B, C) to be heated by a radiator (2) which is controlled by the valve (10) wherein the valve driving means (12) is in communication with the temperature sensor (13, 20) and is operable in response thereto to drive the valve member (11) to a fully closed position if the sensed temperature exceeds a first threshold temperature, the first threshold temperature being lower than a specified target temperature for the zone (A, B, C) **characterised in that** there is a second threshold temperature higher than the first threshold temperature, and the valve (10) is re-opened from the fully closed position if the temperature of the zone (A, B, C) exceeds then drops below the second threshold temperature.

2. A controllable radiator valve (10) as claimed in claim 1 wherein when the temperature of the zone (A, B, C) is below the first and second threshold temperatures the valve (10) is operable in the manner of a conventional thermostatic valve.

3. A controllable radiator valve (10) as claimed in claim 2 wherein the valve (10) opening at the second threshold temperature restores the valve (10) to a partly open position that is equivalent to that which a thermostatic valve would be in at the second threshold temperature.

4. A controllable radiator valve (10) as claimed in any preceding claim wherein the target temperature is preset or is user defined and/or the first and second threshold temperatures are defined by reference to the target temperature.

5. A controllable radiator valve (10) as claimed in any preceding claim wherein the temperature sensor (13, 20) comprises an electronic temperature sensor (13, 20) operable to output signals indicative of the temperature in the zone (A, B, C) to be heated by the radiator (2), and wherein the sensor is incorporated into a valve housing or is mounted separately from a valve housing and is in communication with the valve control means via a wired or wireless link.

6. A controllable radiator valve (10) as claimed in any one of claims 1 to 5 wherein the temperature sensor (13, 20) comprises a sensing element operable to expand or contract with temperature variation, the valve (10) being primarily driven by the sensing element or is primarily in communication with the sensing element by direct physical contact.

7. A controllable radiator valve (10) as claimed in claim 6 wherein further means are provided to determine the extent of any expansion or contraction of the sensing element such that signals indicative of the zone (A, B, C) temperature can be generated, such signals being used to estimate a point at which the zone (A, B, C) temperature exceeds the first threshold temperature by monitoring the position of an end point of the sensing element, the first and second threshold temperatures being defined by a particular level of expansion or contraction of the element.

8. A controllable radiator valve (10) as claimed in claim 7 wherein the target temperature is set by rotating a valve housing to limit the range of movement of the sensing element.

9. A method of operating a radiator valve (10) of the type comprising a valve driving means (12) operable to controllably drive the valve (10) between an open position and a closed position comprising the steps of: sensing a temperature of a zone (A, B, C) to be heated; and fully closing the valve (10) in the event that the sensed temperature of the zone (A, B, C) exceeds a first threshold temperature, the first threshold temperature being lower than a specified target temperature for the zone (A, B, C) **characterised in that** there is a second threshold temperature higher than the first threshold temperature and, the valve (10) is re-opened from the fully closed position if the temperature of the zone (A, B, C) exceeds then drops below the second threshold temperature.

10. A method as claimed in claim 9 wherein the target temperature is preset or is user defined and/or wherein the first and second threshold temperatures are defined by reference to the target temperature.

11. A heating system (100) comprising: a boiler (30); and one or more radiators (2) connected thereto, the radiators (2) provided in one or more zones (A, B, C) to be heated and the operation thereof being controlled by a valve (10) according to any one of claims 1 to 8 or a valve (10) which is arranged to implement the method of claim 9 or claim 10.

12. A heating system (100) as claimed in claim 11 wherein the system is provided with a system controller (40) in wired or wireless communication with the boiler (30), valve driving means (12) and any temperature sensors (13, 20) provided, and being operable to compare the temperature of each of the one or more zones (A, B, C) with the target and/or first and second threshold temperatures and thereby command the valve driving means (12) to open or close as required.

13. A method of controlling a heating system (100) as claimed in claim 11 or claim 12, the method comprising the steps of: determining whether a heating demand in each individual zone (A, B, C) is satisfied; starting heating operation of the boiler (30) if it is determined that the heating demand is not satisfied in a number of zones (A, B, C) equal to or greater than a first specified number of zones; and stopping heating operation of the boiler (30) if it is determined that the heating demand in a number of zones (A, B, C) equal to or greater than a second specified number of zones (A, B, C) is satisfied **characterised in that** the second specified number is less than the total number of individual zones.

14. A method as claimed in claim 13 wherein the determination of whether the heating demand in an individual zone (A, B, C) is satisfied involves monitoring an output of the temperature sensor (13, 20) and/or monitoring a status of a valve member (11) of the valve (10) incorporated into any radiators (2) in that individual zone (A, B, C); and comparing the temperature of the zone (A, B, C) with a target temperature, a first and/or a second threshold temperature for that individual zone (A, B, C).

15. A method as claimed in claim 14 wherein the temperature sensors (13, 20) in each zone (A, B, C) have equal target temperatures or have different target temperatures and wherein the first or second threshold temperatures may be equal and/or differ for each zone (A, B, C) and wherein the target temperatures and/or first and second threshold temperatures for each zone (A, B, C) are set locally or are set centrally.

16. A method as claimed in claim 15 wherein the method involves sensing the temperature of a zone (A, B, C) in advance of a system activation time; comparing the sensed zone (A, B, C) temperature to the target temperature and/or to a sensed external temperature and advancing the activation time if the sensed zone (A, B, C) temperature is lower than the target temperature or if the difference between sensed zone (A, B, C) temperature and the external temperature exceeds a preset value.

17. A method as claimed in claim 16 wherein the period by which the activation time is advanced is dependent upon the difference between the sensed zone (A, B, C) temperature and the target temperature and/or the amount by which the difference between the sensed zone (A, B, C) temperature the external temperature exceeds the preset value.

18. A method as claimed in any one of claims 13 to 17 wherein said method is applied to maintaining a hot water tank at a desired target temperature

19. A method as claimed in any one of claims 13 to 18 wherein the target temperature of a zone (A, B, C) is varied in response to whether it is determined to be occupied at a particular time, wherein if the system is activated and a zone (A, B, C) is determined to be unoccupied, the method resets the zone target temperature to a lower value.

20. A method as claimed in claim 19 wherein the method includes the further step of learning and storing patterns of zone occupancy and operating the heating system in response to said learnt occupancy patterns.

21. A method as claimed in any one of claims 13 to 20 wherein the method is operable to vary the target temperature in one or more zones in response to an override instruction generated in response to user actuation of a suitable control provided on a particular valve (10) or upon a system controller (40), wherein when a particular override is made on a predetermined number of consecutive occasions, the override value or state is reset as the default value or state.

## Patentansprüche

1. Steuerbares Heizkörperventil (10) mit:
einer Ventilstelleinrichtung (12), welche zum gesteuerten Stellen eines Ventilelements (11) zwischen einer geöffneten Position und einer geschlossenen Position betreibbar ist, und
einem Temperatursensor (13, 20), welcher zum Bestimmen einer Temperatur betreibbar und in einer Zone (A, B, C) angeordnet ist, welche von dem Heizkörper (2) zu beheizen ist, welcher durch das Ventil (10) gesteuert ist,
wobei die Ventilstelleinrichtung (12) in Kommunikation mit dem Temperatursensor (13, 20) steht und in Abhängigkeit hiervon betreibbar ist, um das Ventilelement (11) in eine vollständig geschlossene Position zu verstellen,
wenn die gemessene Temperatur eine erste Schwelltemperatur überschreitet,
wobei die erste Schwelltemperatur geringer als eine angegebene Zieltemperatur für die Zone (A, B, C) ist,
**dadurch gekennzeichnet,**
**dass** eine zweite Schwelltemperatur vorgesehen ist, welche höher als die erste Schwelltemperatur ist, und
**dass** das Ventil (10) von der vollständig geschlossenen Position wieder geöffnet ist, wenn die Temperatur der Zone (A, B, C) die zweite Schwelltemperatur übersteigt und dann darunter abfällt.

2. Steuerbares Heizkörperventil (10) nach Anspruch 1,
wobei das Ventil (10) in der Art eines konventionellen thermostatischen Ventils betreibbar ist, wenn die Temperatur der Zone (A, B, C) unterhalb der ersten und zweiten Schwelltemperatur liegt.

3. Steuerbares Heizkörperventil (10) nach Anspruch 2,
wobei das Ventil (10) beim Öffnen bei der zweiten Schwelltemperatur das Ventil (10) zu einer teilweise geöffneten Position rückstellt, welche äquivalent zu einer solchen ist, welche bei einem thermostatischen Ventil bei der zweiten Schwelltemperatur gegeben wäre.

4. Steuerbares Heizkörperventil (10) nach einem der vorhergehenden Ansprüche, wobei die Zieltemperatur voreingestellt ist oder durch einen Nutzer vorgegeben ist und/oder die erste und zweite Schwelltemperatur durch Bezug auf die Zieltemperatur definiert sind.

5. Steuerbares Heizkörperventil (10) nach einem der vorhergehenden Ansprüche,
wobei der Temperatursensor (13, 20) einen elektronischen Temperatursensor (13, 20) aufweist, welcher zum Ausgeben von Signalen betreibbar ist, welche bezeichnend für die Temperatur in der von dem Heizkörper (2) zu beheizenden Zone (A, B, C) sind, und
wobei der Sensor in ein Ventilgehäuse eingebaut oder getrennt von einem Ventilgehäuse angeordnet ist und über eine Leitungsverbindung oder eine drahtlose Verbindung in Kommunikation mit der Ventilsteuereinrichtung steht.

6. Steuerbares Heizkörperventil (10) nach einem der Ansprüche 1 bis 5,
wobei der Temperatursensor (13, 20) ein Sensorelement aufweist, welches bei einer Temperaturänderung expandiert oder kontrahiert, wobei das Ventil (10) primär durch das Sensorelement verstellt wird oder primär über einen direkten physikalischen Kontakt in Kommunikation mit dem Messelement steht.

7. Steuerbares Heizkörperventil (10) nach Anspruch 6,
wobei eine weitere Einrichtung zum Bestimmen des Ausmaßes einer Expansion oder Kontraktion des Sensorelementes vorgesehen ist, so dass Signale bezeichnend für die Temperatur der Zone (A, B, C) erzeugt werden können, wobei diese Signale zum Ermitteln eines Punktes verwendet werden, bei welchem durch Überwachen der Position eines Endpunktes des Sensorelementes die Temperatur in der Zone (A, B, C) die erste Schwelltemperatur übersteigt, wobei die erste und zweite Schwelltemperatur durch ein bestimmtes Niveau der Expansion und Kontraktion des Elementes definiert sind.

8. Steuerbares Heizkörperventil (10) nach Anspruch 7,
wobei die Zieltemperatur durch Drehen eines Ventilgehäuses festgesetzt ist, um einen Bewegungsbereich des Messelementes zu begrenzen.

9. Verfahren zum Betreiben eines Heizkörperventils (10) des Typs mit einer Ventilstelleinrichtung (12), welche zum gesteuerten Stellen des Ventils (10) zwischen einer geöffneten Position und einer geschlossenen Position betreibbar ist, mit den Verfahrensschritten:
Messen einer Temperatur einer zu beheizenden Zone (A, B, C) und
vollständiges Schließen des Ventils (10) für den Fall, dass die gemessene Temperatur der Zone (A, B, C) eine erste Schwelltemperatur übersteigt, wobei die erste Schwelltemperatur geringer als eine angegebene Zieltemperatur für die Zone (A, B, C) ist,
**dadurch gekennzeichnet,**
**dass** eine zweite Schwelltemperatur vorgesehen wird, welche höher als die erste Schwelltemperatur ist, und
**dass** das Ventil (10) von der vollständig geschlossenen Position wieder geöffnet wird, wenn die Temperatur der Zone (A, B, C) die zweite Schwelltemperatur übersteigt und dann darunter abfällt.

10. Verfahren nach Anspruch 9,
wobei die Zieltemperatur voreingestellt wird oder durch einen Nutzer vorgegeben wird und/oder die erste und zweite Schwelltemperatur durch Bezug auf die Zieltemperatur definiert werden.

11. Heizungssystem (100) mit:
einem Heizungskessel (30) und
einem oder mehreren damit verbundenen Heizkörpern (2), wobei die Heizkörper (2) in einer oder mehreren zu beheizenden Zonen (A, B, C) vorgesehen sind und deren Betrieb durch ein Ventil (10) nach einem der Ansprüche 1 bis 8 oder einem Ventil (10) gesteuert sind, welches zur Durchführung des Verfahrens nach Anspruch 9 oder 10 angeordnet ist.

12. Heizungssystem (100) nach Anspruch 11,
wobei das System mit einer Systemsteuerung (40) versehen ist, welche in Leitungsverbindung oder in drahtloser Verbindung steht mit dem Heizkessel (30),
einer Ventilstelleinrichtung (12) und
jedem vorgesehenen Temperatursensor (13, 20), und
welche betreibbar ist, um die Temperatur in jeder der einen oder mehreren Zonen (A, B, C) mit der Zieltemperatur und/oder der ersten und der zweiten Schwelltemperatur zu vergleichen und hierdurch die Ventilstelleinrichtung (12) zum Öffnen und Schließen in erforderlicher Weise zu steuern.

13. Verfahren zum Steuern eines Heizungssystems (100) nach Anspruch 11 oder Anspruch 12,
wobei das Verfahren die Verfahrensschritte aufweist:
Ermitteln, ob ein Heizbedarf in jeder der individuellen Zonen (A, B, C) erfüllt ist,
Beginnen eines Heizbetriebs des Heizkessels (30), wenn ermittelt wird, dass der Heizbedarf in einer Anzahl von Zonen (A, B, C) nicht erfüllt ist, welche gleich oder größer als eine erste angegebene Anzahl von Zonen ist, und
Beenden des Heizbetriebs des Heizkessels (30), wenn ermittelt wird, dass der Heizbedarf in einer Anzahl von Zonen (A, B, C) erfüllt ist, welche gleich oder größer als eine zweite angegebene Anzahl von Zonen (A, B, C) ist,
**dadurch gekennzeichnet,**
**dass** die zweite angegebene Anzahl geringer als die Gesamtanzahl der individuellen Zonen ist.

14. Verfahren nach Anspruch 13,
wobei die Ermittlung, ob der Heizbedarf in einer individuellen Zone (A, B, C) erfüllt ist,
ein Überwachen eines Ausgangs des Temperatursensors (13, 20) und/oder ein Überwachen des Status eines Ventilelementes (11) des Ventils (10),
welches in jedem Heizkörper (2) in dieser individuellen Zone (A, B, C) eingebaut ist, und
ein Vergleichen der Temperatur der Zone (A, B, C) mit einer Zieltemperatur, einer ersten und/oder einer zweiten Schwelltemperatur für die individuelle Zone (A, B, C) umfasst.

15. Verfahren nach Anspruch 14,
wobei die Temperatursensoren (13, 20) in jeder Zone (A, B, C) die gleiche Zieltemperatur oder unterschiedliche Zieltemperaturen haben und
wobei die erste und zweite Schwelltemperatur gleich und/oder unterschiedlich für jede Zone (A, B, C) ist und
wobei die Zieltemperaturen und/oder die erste und zweite Schwelltemperatur für jede Zone (A, B, C) lokal oder zentral festgesetzt werden.

16. Verfahren nach Anspruch 15,
wobei das Verfahren umfasst:
Messen der Temperatur einer Zone (A, B, C) vor einer Systemaktivierungszeit,
Vergleichen der gemessenen Temperatur der Zone (A, B, C) mit der Zieltemperatur und/oder einer gemessenen Außentemperatur und
Fortschreiten mit der Aktivierungszeit, wenn die gemessene Temperatur der Zone (A, B, C) geringer als die Zieltemperatur ist, oder wenn der Unterschied zwischen der gemessenen Temperatur der Zone (A, B, C) und der Außentemperatur einen voreingestellten Wert übersteigt.

17. Verfahren nach Anspruch 16,
wobei eine Zeitspanne, bei welcher die Aktivierungszeit fortschreitet, abhängig ist von dem Unterschied zwischen der gemessenen Temperatur der Zone (A, B, C) und der Zieltemperatur und/oder dem Ausmaß, mit welchem der Unterschied zwischen der gemessenen Temperatur der Zone (A, B, C) und der Außentemperatur einen voreingestellten Wert übersteigt.

18. Verfahren nach einem der Ansprüche 13 bis 17,
wobei das Verfahren angewendet wird, um einen Heißwassertank auf einer gewünschten Zieltemperatur zu halten.

19. Verfahren nach einem der Ansprüche 13 bis 18,
wobei die Zieltemperatur einer Zone (A, B, C) in Abhängigkeit davon verändert wird, wenn ermittelt wird, ob diese in einer bestimmten Zeit besetzt ist, wobei das Verfahren die Zieltemperatur einer Zone auf einen geringeren Wert rücksetzt, wenn das System aktiviert ist und ermittelt ist, dass eine Zone (A, B, C) unbesetzt ist.

20. Verfahren nach Anspruch 19,
wobei das Verfahren den weiteren Verfahrensschritt des Lernens und Speicherns von Mustern einer Zonenbelegung und eines Betreibens des Heizungssystems in Abhängigkeit von den gelernten Belegungsmustern aufweist.

21. Verfahren nach einem der Ansprüche 13 bis 20,
wobei das Verfahren betreibbar ist, um die Zieltemperatur in einer oder mehreren Zonen in Abhängigkeit von einem Überschreibungsbefehl zu ändern, welcher in Abhängigkeit von einer Nutzerbetätigung einer an einem bestimmten Ventil (10) vorgesehen und geeigneten Steuerung oder durch eine Systemsteuerung (40) erzeugt wird, wobei der Überschreibungswert oder Überschreibungsstatus als ein Fehlwert oder Fehlstatus rückgesetzt wird, wenn eine bestimmte Überschreibung an einer vorgegebenen Anzahl bei aufeinander folgenden Ereignissen durchgeführt wird.

## Revendications

1. Robinet (10) de radiateur pouvant être commandé, comprenant : un moyen (12) d'entraînement du robinet, pouvant fonctionner pour mettre de manière commandée un élément (11) du robinet entre une position ouverte et une position fermée, et une sonde (13, 20) de température placée dans une zone (A, B, C) à chauffer par un radiateur, qui est commandé par le robinet (10), et pouvant fonctionner pour en déterminer la température, le moyen (12) d'entraînement du robinet étant en communication avec la sonde (13, 20) de température et pouvant fonctionner pour mettre l'élément (11) du robinet à une position fermée complètement, si la température détectée dépasse une première température de seuil, la première température de seuil étant plus basse qu'une température cible spécifiée pour la zone (A, B, C), **caractérisé en ce qu'**il y a une deuxième température de seuil plus haute que la première température de seuil et le robinet (10) est rouvert à partir de la position fermée complètement, si la température de la zone (A, B, C) dépasse, puis devient inférieure à la deuxième température de seuil.

2. Robinet (10) de radiateur pouvant être commandé suivant la revendication 1, dans lequel, lorsque la température de la zone (A, B, C) est inférieure aux première et deuxième températures de seuil, le robinet (10) peut fonctionner à la manière d'un robinet thermostatique classique.

3. Robinet (10) de radiateur pouvant être commandé suivant la revendication 2, dans lequel l'ouverture du robinet (10) à la deuxième température de seuil remet le robinet (10) à une position ouverte en partie, qui est équivalente à celle dans lequel serait un robinet thermostatique à la deuxième température de seuil.

4. Robinet (10) de radiateur pouvant être commandé suivant l'une quelconque des revendications précédentes, dans lequel la température cible est préfixée ou est définie par un utilisateur et/ou la première et la deuxième températures de seuil sont définies par référence à la température cible.

5. Robinet (10) de radiateur pouvant être commandé suivant l'une quelconque des revendications précédentes, dans lequel la sonde (13, 20) de température comprend une sonde (13, 20) de température électronique, pouvant fonctionner pour émettre des signaux indicatifs de la température de la zone (A, B, C) à chauffer par le radiateur (2), et dans lequel la sonde est incorporée dans le corps du robinet ou est montée séparément du corps du robinet et est en communication avec le moyen de commande du robinet par l'intermédiaire d'un lien filaire ou sans fil.

6. Robinet (10) de radiateur pouvant être commandé suivant l'une quelconque des revendications 1 à 5, dans lequel la sonde (13, 20) comprend un élément de détection, pouvant fonctionner pour se dilater ou se contracter en fonction d'une variation de température, le robinet (10) étant entraîné principalement par l'élément de détection ou étant principalement en communication avec l'élément de détection par contact physique direct.

7. Robinet (10) de radiateur pouvant être commandé suivant la revendication 6, dans lequel il est prévu d'autres moyens pour déterminer l'étendue de toute dilation ou contraction de l'élément de détection, de manière à pouvoir produire des signaux indicatifs de la température de la zone (A, B, C), des signaux de ce genre étant utilisés pour estimer un point où la température de la zone (A, B, C) dépasse la première température de seuil en contrôlant la position d'un point d'extrémité de l'élément de détection, les première et deuxième températures de seuil étant définies par un niveau particulier de dilatation ou de contraction de l'élément.

8. Robinet (10) de radiateur pouvant être commandé suivant la revendication 7, dans lequel la température cible est fixée en faisant tourner le corps du robinet pour limiter la plage de déplacement de l'élément de détection.

9. Procédé pour faire fonctionner un robinet (10) de radiateur du type comprenant un moyen (12) d'entraînement du robinet, pouvant fonctionner pour mettre de manière commandée le robinet (10) entre une position ouverte et une position fermée, comprenant les stades de : détection d'une température d'une zone (A, B, C) à chauffer ; et fermeture complète du robinet (10), dans le cas où la température détectée de la zone (A, B, C) dépasse une première température de seuil, la première température de seuil étant plus basse qu'une température cible spécifiée pour la zone (A, B, C), **caractérisé en ce qu'**il y a une deuxième température de seuil plus haute que la première température de seuil et le robinet (10) est rouvert à partir de la position fermée complètement, si la température de la zone (A, B, C) dépasse, puis devient inférieure à la deuxième température de seuil.

10. Procédé suivant la revendication 9, dans lequel la température cible est préfixée ou est définie par un utilisateur et/ou la première et la deuxième températures de seuil sont définies par référence à la température cible.

11. Système (100) de chauffage, comprenant : une chaudière (30) ; et un ou plusieurs radiateurs (2) qui y sont reliés, les radiateurs (2) étant prévus dans une ou plusieurs zones (A, B, C) à chauffer et leur fonctionnement étant commandé par un robinet (10) suivant l'une quelconque des revendications 1 à 8 ou par un robinet (10), qui est agencé pour mettre en oeuvre le procédé de la revendication 9 ou de la revendication 10.

12. Système (100) de chauffage suivant la revendication 11, dans lequel le système est pourvu d'une unité (40) de commande du système en communication filaire ou sans fil avec la chaudière (30), d'un moyen (12) d'entraînement du robinet et de sondes (13, 20) de température, et pouvant fonctionner pour comparer la température de chacune des unes ou plusieurs zones (A, B, C) à la température cible et/ou à des première et deuxième températures de seuil et pour commander ainsi le moyen (12) d'entraînement du robinet en ouverture ou en fermeture comme requis.

13. Procédé de commande d'un système (100) de chauffage suivant la revendication 11 ou la revendication 12, le procédé comprenant les stades : détermination si une demande de chauffage dans chaque zone (A, B, C) individuelle est satisfaite ; lancement d'une opération de chauffage de la chaudière (30) s'il est déterminé que l'exigence de chauffage n'est pas satisfaite dans un nombre de zones (A, B, C) supérieur ou égal à un premier nombre spécifié de zones et arrêter l'opération de chauffage de la chaudière (30) s'il est déterminé que l'exigence de chauffage dans un nombre de zones (A, B; C) supérieur ou égal à un deuxième nombre spécifié de zones (A, B, C) est satisfaite, **caractérisé en ce que** le deuxième nombre spécifié est plus petit que le nombre total de zones individuelles.

14. Procédé suivant la revendication 13, dans lequel la détermination du point de savoir si l'exigence de chauffage dans une zone (A, B, C) individuelle implique un contrôle d'un signal de sortie de la sonde (13, 20) de température et/ou un contrôle d'un état d'un élément (11) du robinet (10) incorporé dans n'importe quel radiateur (2) de cette zone (A, B, C) individuelle et une comparaison de la température de la zone (A, B, C) à une température cible, une première et/ou une deuxième température de seuil pour cette zone (A, B, C) individuelle.

15. Procédé suivant la revendication 14, dans lequel les sondes (13, 20) de température de chaque zone (A, B, C) ont des températures cibles égales ou ont des températures cibles différentes et dans lequel la première ou la deuxième température de seuil peut être égale et/ou peut être différente pour chaque zone (A, B, C) et dans lequel les températures cibles et/ou les première ou deuxième températures de seuil pour chaque zone (A, B, C) sont fixées localement ou sont fixées d'une manière centrale.

16. Procédé suivant la revendication 15, dans lequel le procédé implique de détecter la température d'une zone (A, B, C) à l'avance d'un temps d'activation du système ; comparer la température détectée de la zone (A, B, C) à la température cible et/ou à une température extérieure détectée et d'avancer le temps d'activation si la température de la zone (A, B, C) détectée est plus basse que la température cible ou si la différence entre la température de la zone (A, B, C) détectée et la température extérieure dépasse une valeur fixée à l'avance.

17. Procédé suivant la revendication 16, dans lequel la durée pendant laquelle le temps d'activation est avancé dépend de la différence entre la température détectée de la zone (A, B, C) et la température cible et/ou de la quantité dont la différence entre la température détectée de la zone (A, B, C) et la température extérieure dépasse la valeur fixée à l'avance.

18. Procédé suivant l'une quelconque des revendications 13 à 17, dans lequel le procédé est appliqué pour maintenir un ballon d'eau chaude à une température cible souhaitée.

19. Procédé suivant l'une quelconque des revendications 13 à 18, dans lequel la température cible d'une zone (A, B, C) est modifiée en réaction au point de savoir s'il est déterminé qu'elle sera occupée à un instant particulier, dans lequel, si le système est activé et s'il est déterminé qu'une zone (A, B, C) est inoccupée, le procédé refixe la température cible de la zone à une valeur plus basse.

20. Procédé suivant la revendication 19, dans lequel le procédé inclut le stade supplémentaire d'apprentissage et de mémorisation de configuration d'occupation de zone et de fonctionnement du système de chauffage en réaction à ces configurations apprises d'occupation.

21. Procédé suivant l'une quelconque des revendications 13 à 20, dans lequel on peut faire fonctionner le procédé pour modifier la température cible dans une ou plusieurs zones en réaction à une instruction prioritaire produite en réaction à un actionnement d'utilisateur d'une commande appropriée prévue sur un robinet (10) particulier ou par une unité (40) de commande du système, dans lequel, lorsqu'une priorité particulière est faite en un nombre déterminé à l'avance d'occasions consécutives, la valeur ou l'état prioritaire est refixé comme valeur ou état de défaut.
